# EUROPEAN PATENT APPLICATION

(11) **EP 3 579 304 A1**
(43) Date of publication of application: **11.12.2019**
(21) Application number: 17895081.2
(22) Date of filing: 31.01.2017
(51) Int. Cl.: H01M 2/20

(54) **BATTERY PACK PRODUCTION METHOD AND PRODUCTION DEVICE**

(71) Applicant: Envision AESC Japan Ltd., Zama-shi, Kanagawa 252-0012 (JP)
(72) Inventor: NAKAMOTO, Masahiro, Atsugi-shi Kanagawa 243-0123 (JP); KUWATA, Akio, Atsugi-shi Kanagawa 243-0123 (JP)
(74) Representative: Global IP Europe Patentanwaltskanzlei
(86) International application number: PCT/JP2017/003433
(87) International publication number: WO 2018/142476

(57) **Abstract**

A method is provided for producing a battery pack by which electrode tabs and busbars can be joined in an advantageous manner. A first spacer (114) is moved in one direction each time a unit cell (110) is stacked, whereby a portion where an electrode tab (112) is joined to a busbar (132) can be positioned in a predetermined position in a movement direction of the first spacer.

## Description

### Technical Field

The present invention relates to a method and device for producing a battery pack.

### Background Technology

A battery pack has a plurality of unit cells that include a power generation element having electrode tabs extending out to the exterior of the power generation element; spacers that support the electrode tabs; and busbars that electrically connect the electrode tabs of different unit cells.

In a step for producing such a battery pack, there is a step for joining the busbars to the electrode tabs. In relation thereto, a method of performing laser welding with the electrode tab of each unit cell inserted into a curved part of the busbar is disclosed in, e.g., Patent Citation 1 noted below.

### Prior Art Documents

### Patent Documents

Patent Citation 1: Japanese Patent Application Publication No. 2012-515418

### Disclosure of the Invention

### Problems to Be Solved by the Invention

In the joining method described in Patent Citation 1, a stacking-direction position of the electrode tab with respect to the curved part may be displaced by, *inter alia*, variation in a thickness of a battery cell. When the stacking-direction position of the electrode tab with respect to the curved part is thusly displaced, a gap between a distal end of the electrode tab and the busbar will change, and joining quality may deteriorate.

The present invention was contrived in order to solve the aforementioned problem, it being an object thereof to provide a method and a device for producing a battery pack that allow electrode tabs and busbars to be joined in an advantageous manner.

### Means Used to Solve the Above-Mentioned Problems

The method for producing a battery pack to the present invention, which achieves the aforementioned object, is a method for producing a battery pack that has: a plurality of unit cells that include a power generation element and electrode tabs; spacers that support the electrode tabs; and busbars that electrically connect the electrode tabs of different unit cells. The spacers are moved in one direction for each stacking step in which the unit cells are stacked such that the portions of the electrode tabs joined to the busbars are positioned in a predetermined position in the direction in which the spacers move.

The device for producing a battery pack according to the present invention, which achieves the aforementioned object, is a device for producing a battery pack that has: a plurality of unit cells that include a power generation element and electrode tabs; spacers that support the electrode tabs; and busbars that electrically connect the electrode tabs of the different unit cells. The device for producing a battery pack has a positioning member in which the spacers are moved in one direction for each step in which the unit cells are stacked such that the portions of the electrode tabs joined to the busbars are positioned in a predetermined position in the direction in which the spacers move.

### Brief Description of the Drawings

[Fig. 1] is a perspective view showing a battery pack according to an embodiment;
[Fig. 2] is a perspective view showing a state in which a compression unit (left and right side plates of an upper pressure-applying plate and a lower pressure-applying plate) has been detached and parts of a busbar unit (protective cover, anode-side terminal, and cathode-side terminal) have been detached from the battery pack shown in Fig. 1;
[Fig. 3A] is a perspective view showing, by cross section, a main part in the state in which a busbar has been joined to the electrode tabs of stacked unit cells;
[Fig. 3B] is a cross-sectional view showing Fig. 3A from a side;
[Fig. 4] is a perspective view showing a state in which a busbar holder and the busbars have been detached from the stack shown in Fig. 2;
[Fig. 5] is a perspective view showing a state in which a first cell subassembly and a second cell subassembly shown in Fig. 4 are electrically connected by the busbars;
[Fig. 6] is a perspective view showing a state in which the first cell subassembly (a set of three unit cells connected in parallel) shown in Fig. 4 has been disassembled for each unit cell, and a first spacer and a second spacer have been detached from one (uppermost) of the unit cells;
[Fig. 7] is a perspective view showing a main part of the first spacer;
[Fig. 8] is a flowchart showing the method for producing a battery pack according to a first embodiment;
[Fig. 9] is a perspective view showing a portion of the device for producing a battery pack according to the first embodiment;
[Fig. 10] is an enlarged view of section A of Fig. 9;
[Fig. 11] is a perspective view schematically showing the lower pressure-applying plate placed on a placement stand, and a first unit cell being stacked on the lower pressure-applying plate;
[Fig. 12] is a perspective view schematically showing the first unit cell stacked on the lower pressure-applying plate;
[Fig. 13] is a top view showing a state in which a positioning step is performed;
[Fig. 14] is a perspective view schematically showing a second unit cell being stacked on the first unit cell;
[Fig. 15] is a perspective view showing a state in which the positioning step is performed with a gap arranged between the first unit cell and the second unit cell;
[Fig. 16] is a perspective view showing the state in which the second unit cell has been brought into contact with the first unit cell;
[Fig. 17] is a perspective view schematically showing the upper pressure-applying plate stacked on the stack;
[Fig. 18] is a perspective view schematically showing the stack sandwiched between the upper pressure-applying plate and the lower pressure-applying plate being compressed by a press;
[Fig. 19] is a perspective view schematically showing a side plate being welded to the lower pressure-applying plate and the upper pressure-applying plate;
[Fig. 20] is a perspective view schematically showing the busbars being brought into contact with the electrode tabs, respectively, of the stacked unit cells, and laser welding being performed;
[Fig. 21] is a perspective view schematically showing anode-side terminals being brought into contact with and laser-welded to anode-side busbars at an anode-side end, and cathode-side terminals being brought into contact with and laser-welded to cathode-side busbars at a cathode-side end;
[Fig. 22] is a perspective view schematically showing a state in which a plurality of busbars are covered by a single protective cover;
[Fig. 23] is a perspective view showing the method for producing a battery pack according to a second embodiment and a state in which the electrode tab of the first unit cell is positioned;
[Fig. 24] is a perspective view showing the method for producing the battery pack according to the second embodiment and a state in which the electrode tab of the second unit cell is positioned;
[Fig. 25] is a perspective view showing the method for producing a battery pack according to a third embodiment and a state in which unit cells have been stacked via gaps by support parts;
[Fig. 26] is a top view showing the method for producing the battery pack according to the third embodiment and a state prior to the positioning step being performed;
[Fig. 27] is a top view showing the method for producing the battery pack according to the third embodiment and the state after the positioning step has been performed; and
[Fig. 28] is a perspective view showing the method for producing the battery pack according to the third embodiment and a state in which the supporting state of the support parts has been released and all of the unit cells have been stacked.

### Preferred Embodiments of the Invention

Embodiments of the present invention are described below with reference to the attached drawings. The same reference numerals are used for the same elements in the description of the drawings, and duplicate descriptions are omitted. The sizes and ratios of the members in the drawings are emphasized for ease of description and may be different from actual sizes and ratios.

In the drawings, the directions are indicated using arrows that represent X, Y, and Z. The direction of the arrow represented by X is the direction that intersects a stacking direction of unit cells 110 and follows a long-axis direction of the unit cells 110. The direction of the arrow represented by Y is the direction that intersects the stacking direction of the unit cells 110 and follows a short-axis direction of the unit cells 110. The direction of the arrow represented by Z is the stacking direction of the unit cells 110.

A plurality of battery packs 100 are mounted in a vehicle such as an electric automobile, and are used as a power source for driving the vehicular motor. The battery pack 100 is configured by being electrically connected by a busbar unit 130 in a state in which a stack 100S, which is obtained by stacking a plurality of the unit cells 110, has been compressed by a compression unit 120.

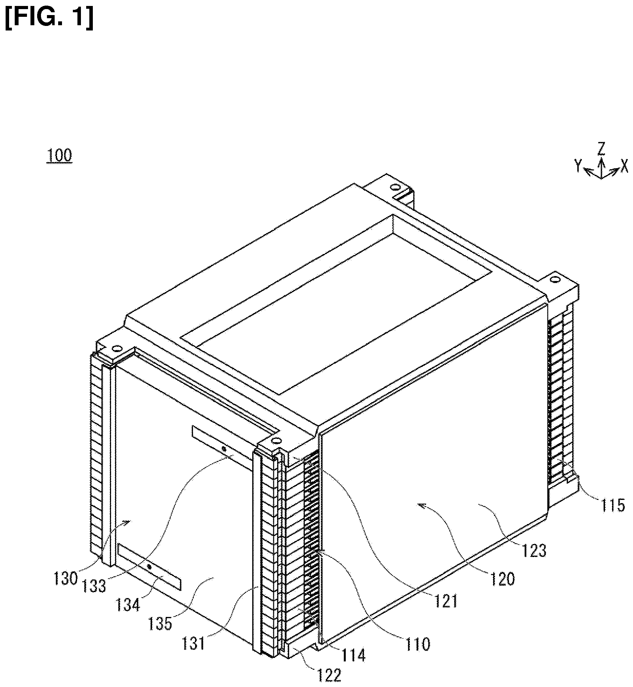

The battery pack 100 according to an embodiment of the present invention will be described with reference to Figs. 1 to 7.

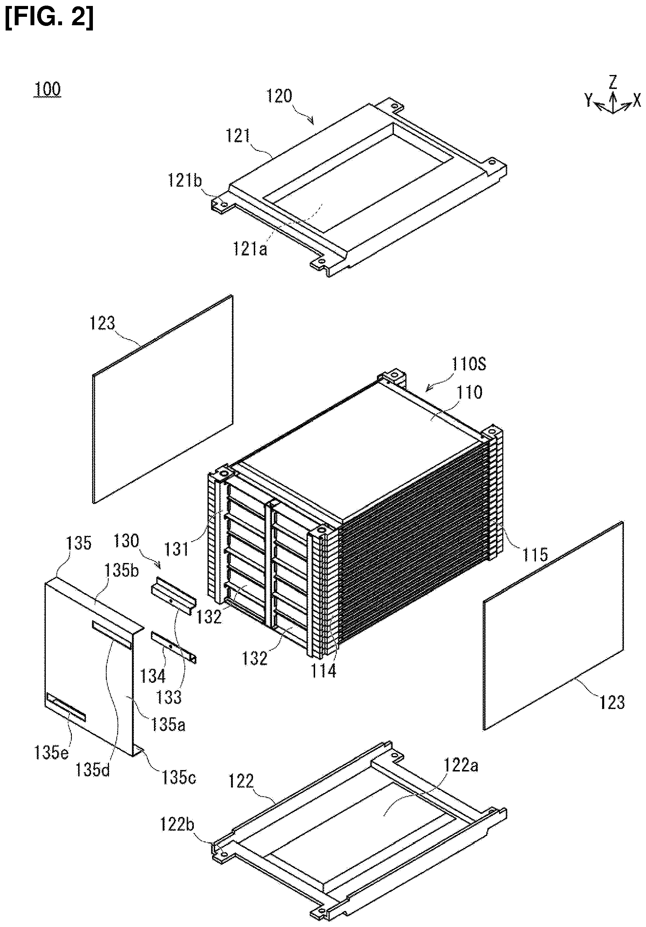

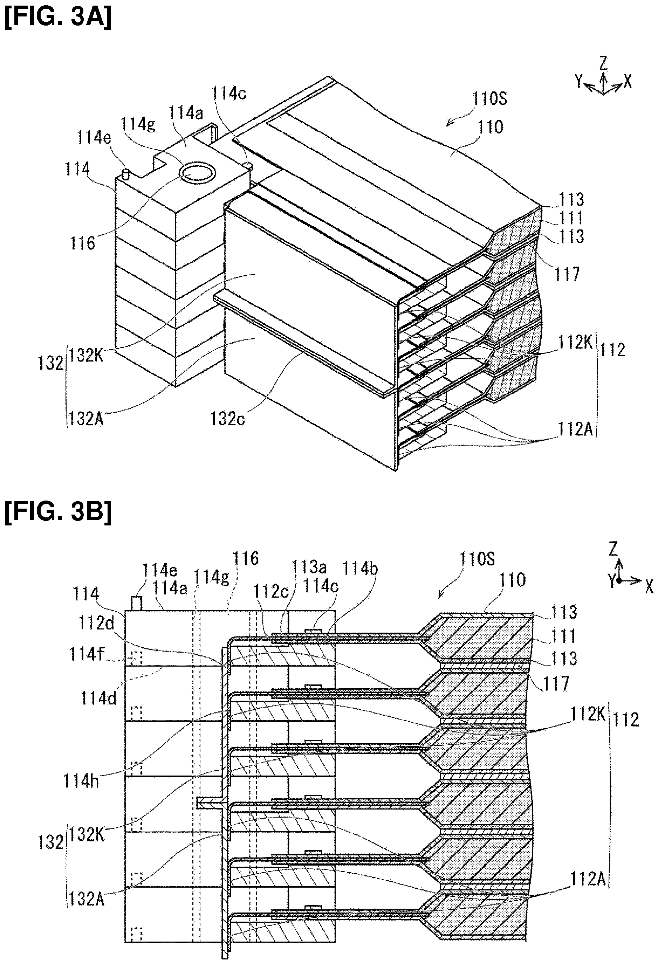

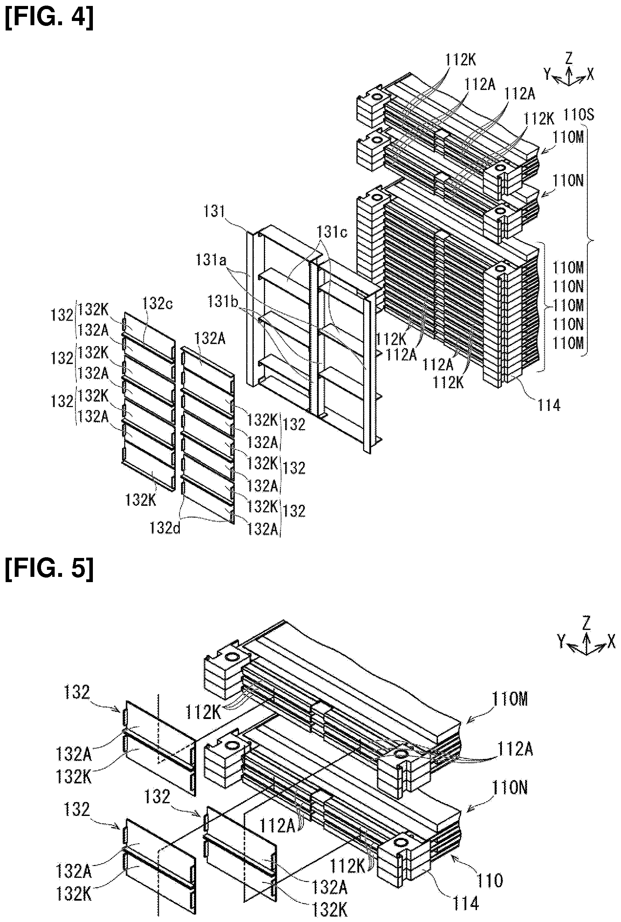

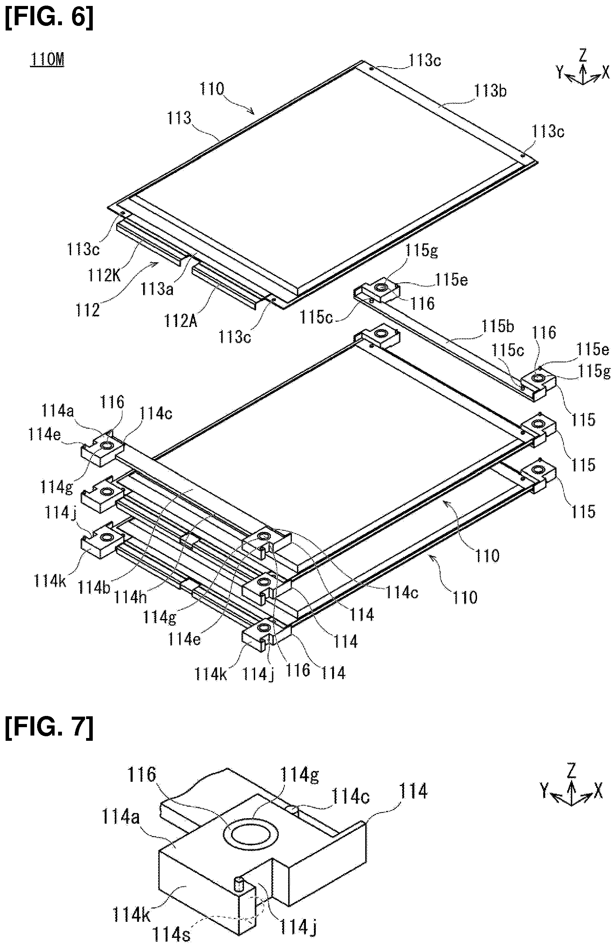

Fig. 1 is a perspective view showing a battery pack 100 according to the present embodiment. Fig. 2 is a perspective view showing a state in which the compression unit 120 (left and right side plates 123 of an upper pressure-applying plate 121 and a lower pressure-applying plate 122) has been detached and parts (protective cover 135, anode-side terminal 133, and cathode-side terminal 134) of a busbar unit 130 have been detached from the battery pack 100 shown in Fig. 1. Fig. 3A is a perspective view showing, by cross section, a main part in a state in which the busbar 132 has been joined to electrode tabs 112 of the stacked unit cells 110; Fig. 3B is a cross-sectional view showing Fig. 3A from a side. Fig. 4 is a perspective view showing a state in which a busbar holder 131 and the busbars 132 have been detached from the stack 100S shown in Fig. 2. Fig. 5 is a perspective view showing a state in which a first cell subassembly 110M and a second cell subassembly 110N shown in FIG. 4 are electrically connected by busbars 132. Fig. 6 is a perspective view showing a state in which the first cell subassembly 110M (a set of three unit cells 110 connected in parallel) shown in Fig. 4 has been disassembled for each unit cell 110, and a first spacer 114 and a second spacer 115 have been detached from one (uppermost) of the unit cells 110. Fig. 7 is a perspective view showing a main part of the first spacer 114.

The configuration of the stack 100S is described in detail below.

The stack 100S is configured by connecting, in series and in alternating fashion, the first cell subassembly 110M comprising three unit cells 110 electrically connected in parallel, and the second cell subassembly 110N comprising three unit cells 110 electrically connected in parallel, as shown in Fig. 4.

The first cell subassembly 110M corresponds to the three unit cells 110 positioned in a first tier (lowermost tier), a third tier, a fifth tier, and a seventh tier (uppermost tier) in the battery pack 100, as shown in Fig. 4. The second cell subassembly 110N corresponds to the three unit cells 110 positioned in a second tier, fourth tier, and sixth tier in the battery pack 100, as shown in Fig. 4.

The first cell subassembly 110M and the second cell subassembly 110N have the same configuration. However, the first cell subassembly 110M and the second cell subassembly 110N are arranged such that by vertically flipping the three unit cells 110, three anode-side electrode tabs 112A and three cathode-side electrode tabs 112K are positioned in alternating fashion along the stacking direction Z, as shown in Figs. 4 and 5.

In the first cell subassembly 110M, all of the anode-side electrode tabs 112A are positioned to a right side in the drawings, and all of the cathode-side electrode tabs 112K are positioned to a left side in the drawings, as shown in Figs. 4 and 5.

In the second cell subassembly 110N, all of the anode-side electrode tabs 112A are positioned to the left side in the drawings, and all of the cathode-side electrode tabs 112K are positioned to the right side in the drawings, as shown in Figs. 4 and 5. Merely by flipping the vertical arrangement of each of the three unit cells 110, orientations of distal end parts 112d of the electrode tabs 112 can vary vertically along the stacking direction Z. Therefore, individual distal end parts 112d are bent downward so that the orientations of the distal end parts 112d of the electrode tabs 112 of all of the unit cells 110 are all the same.

The unit cells 110 correspond to, e.g., lithium ion secondary cells. A plurality of the unit cells 110 are connected in series to meet the specification for drive voltage of the vehicular motor. A plurality of the unit cells 110 are connected in parallel to ensure cell capacity and extend a travel distance of a vehicle.

The unit cells 110 include: a flat power generation element 111 for charging and discharging; electrode tabs 112 extending out from the power generation element 111, the distal end parts 112d being bent along the stacking direction Z; and a laminate film 113 that seals the power generation element 111, as shown in Figs. 3A and 3B.

The power generation elements 111, having been charged with power from an outdoor charging stand, etc., discharge to the vehicular motor, etc., to supply drive power. The power generation elements 111 are constituted by stacking a plurality of sets of anodes and cathodes separated by a separator.

The electrode tabs 112 allow the power generation elements 111 to be exposed to the exterior, as shown in Figs. 3A, 3B, and 4. The electrode tabs 112 are configured from anode-side electrode tabs 112A and cathode-side electrode tabs 112K. The proximal-end side of the anode-side electrode tabs 112A is joined to all of the anodes included in a single power generation element 111. The anode-side electrode tabs 112A are formed in a thin-plate shape and are made of aluminum in conformity with the characteristics of an anode. The proximal-end side of the cathode-side electrode tabs 112K is joined to all of the cathodes included in a single power generation element 111. The cathode-side electrode tabs 112K are formed in a thin-plate shape and are made of copper in conformity with the characteristics of a cathode.

The electrode tabs 112 are formed to assume the shape of the letter "L", as shown in Fig. 3B. The proximal end parts 112c of the electrode tabs 112 are supported from below by a support surface 114b of a first spacer 114. The distal end parts 112d of the electrode tabs 112 are bent downward in the stacking direction Z and face a contact surface 114h of the first spacer 114.

Laminate films 113 form a pair, which sandwich and seal the power generation elements 111 from above and below along the stacking direction Z, as shown in Figs. 3A and 3B. The pair of laminate films 113 allow the anode-side electrode tabs 112A and the cathode-side electrode tabs 112K to extend out towards the exterior from a gap in one end part 113a that follows the short-axis direction Y.

The unit cells 110 are stacked as shown in Figs. 3(A), 3(B), and 4 while supported by pairs of spacers (first spacers 114 and second spacers 115), as shown in Fig. 6.

The pairs of spacers (first spacers 114 and second spacers 115) are arranged at fixed intervals along the stacking direction Z of the unit cells 110, as shown in Figs. 2, 3A, and 3B. The first spacers 114 support the unit cells 110 on the side provided with the electrode tabs 112. The second spacers 115 support the unit cells 110 on the side that is not provided with the electrode tabs 112, so as to face in the long-axis direction X of the first spacers 114 and the unit cells 110.

As shown in Fig. 6, the first spacer 114 is formed in a long plate shape provided with recesses and protrusions, and is made of reinforced plastic provided with insulating properties. The first spacer 114 is provided so as to face one end part 113a of the pair of laminate films 113. The first spacer 114 supports the one end part 113a of the laminate films 113 by means of a flat support surface 114b, as shown in Figs. 3B and 6. The first spacer 114 is provided with a contact surface 114h on a wall surface that follows the stacking direction Z, adjacent to the support surface 114b. On the contact surface 114h, the distal end parts 112d of the electrode tabs 112 are positioned along the long-axis direction X, as shown in Fig. 3B. The first spacer 114 is provided with a pair of linking pins 114c protruding upward at both ends of the support surface 114b along the short-axis direction Y, as shown in Fig. 6. The pairs of linking pins 114c are formed as circular columns and are inserted into linking holes 113c that open in both ends of the one-end parts 113a of the lamination films 113, along the short-axis direction Y, thereby positioning the unit cells 110.

As shown in Fig. 3B, upper surfaces 114a of the first spacers 114 and lower surfaces 114d of adjacent first spacers 114 abut each other. As shown in Fig. 3B, circular-column-shaped positioning pins 114e that protrude from the upper surfaces 114a of the first spacers 114 are fitted into positioning holes 114f that open in the lower surfaces 114d of the adjacent first spacers 114, whereby the first spacers 114 are positioned with each other. The first spacers 114 are provided with locating holes 114g at both ends along the short-axis direction Y, as shown in Fig. 6. The locating holes 114g have a collar 116 inserted therein. Bolts that link together a plurality of the battery packs 100 while positioning the battery packs 100 along the stacking direction Z are inserted into the locating holes 114g.

The first spacers 114 are provided with a pair of linking pins 114c protruding upward at both ends of the support surface 114b along the short-axis direction Y, as shown in Fig. 6. The pair of linking pins 114c are formed as circular columns, and are inserted into the linking holes 113c that open in both ends of the one-end parts 113a of the lamination films 113, along the short-axis direction Y, thereby positioning the unit cells 110.

A plurality of the first spacers 114 is in contact with the upper surface 114a of one first spacer 114 and the lower surface 114d of another first spacer 114, as shown in Fig. 3B. The plurality of first spacers 114 are mutually positioned by fitting together a cylindrical positioning pin 114e protruding from the upper surface 114a of one first spacer 114 and a positioning hole 114f opened in the lower surface 114d of the other first spacer 114, as shown in Fig. 3B.

The first spacers 114 have recesses 114j formed by cutting out a recessed form along the stacking direction Z in a Y-direction outward side surface of the upper surface 114a. The recesses 114j engage projections 221 provided to a positioning member 220 in the method for producing the battery pack 100 (described later).

The recesses 114j have a first surface 114s positioned on the front surface side (the distal end side where the electrode tabs 112 face the busbars 132), as shown in Fig. 7.

The first spacers 114 have an extended surface 114k that is positioned on the front surface side (X-direction negative side) and extends along the stacking direction Z, as shown in Figs. 6 and 7.

The second spacers 115 do not need to support the electrode tabs 112 and are therefore a simplified configuration of the first spacers 114. The second spacers 115 support, by means of a support surface 115b, an other end part 113b facing the one end part 113a of the laminate films 113 along the long-axis direction X. As with the first spacers 114, the second spacers 115 are provided with a positioning pin 115e that positions the second spacers, a linking pin 115c that positions the unit cells 110, and locating holes 115g through which are inserted bolts that position and connect a plurality of the battery packs 100 together, as shown in Fig. 6.

The collars 116 (restricting member) are formed as a circular column and are made of a metal provided with sufficient strength. The collars 116 are inserted into each of the pairs of locating holes 114g of the first spacers 114 and locating holes 115g of the second spacers 115. Bolts (not shown) that connect and position the plurality of the battery packs 100 are inserted into the collars 116. The collars 116 reinforce the first spacers 114 and the second spacers 115 along the stacking direction Z. The amount of deformation of the collars 116 along the stacking direction Z is substantially lower than with the first spacers 114 and the second spacers 115.

A tape member (corresponding to an adhesive member) 117 is disposed between unit cells 110 that are mutually adjacent in the vertical direction unit along the stacking direction Z, and bonds the mutually adjacent unit cells 110 to each other, as shown in Figs. 3A and 3B. The tape member 117 is a double-sided tape provided with adhesiveness on both surfaces. The tape member 117 is provided to a portion that overlaps, in the stacking direction Z, at least the power generation elements 111 included inside the unit cells 110, in the gaps between the unit cells 110. The tape member 117 absorbs stress exerted on the laminate film 113 positioned on the outermost layer of the unit cells 110 and protects the laminate film 113 when the unit cells 110 shake or when an impact is imparted to the unit cells 110.

The configuration of the compression unit 120 is described in detail below.

The compression unit 120 includes an upper pressure-applying plate 121 and a lower pressure-applying plate 122 that compress the power generation element 111 of each unit cell 110 of the stack 100S from above and below, and a pair of side plates 123 that secure the upper pressure-applying plate 121 and the lower pressure-applying plate 122 once the stack 100S is in a compressed state.

The upper pressure-applying plate 121, together with the lower pressure-applying plate 122, compresses the power generation element 111 of each unit cell 110 while sandwiching and holding, from above and below, the plurality of unit cells 110 constituting the stack 100S, as shown in Figs. 1 and 2. The upper pressure-applying plate 121 is formed in a plate shape provided with recesses and protrusions, and is made of a metal provided with sufficient rigidity. The upper pressure-applying plate 121 is disposed in a horizontal plane. The upper pressure-applying plate 121 is provided with a pressure-applying surface 121a that applies downward pressure on the power generation elements 111, as shown in Fig. 2. The pressure-applying surface 121a is formed flat and projects downward from a portion in the center of the upper pressure-applying plate 121. The upper pressure-applying plate 121 is provided with locating holes 121b through which bolts are inserted to connect the battery packs 100 together. The locating holes 121b comprise through-holes and are opened at the four corners of the upper pressure-applying plate 121.

The lower pressure-applying plate 122 has the same shape as the upper pressure-applying plate 121, and is disposed so that the top and bottom of the upper pressure-applying plate 121 are inverted, as shown in Fig. 2. As with the upper pressure-applying plate 121, the lower pressure-applying plate 122 is provided with a pressure-applying surface 122a that applies upward pressure on the power generation elements 111, and locating holes 122b through which bolts are inserted to position and connect the battery packs 100 together along the stacking direction Z.

The pair of side plates 123 secure the upper pressure-applying plate 121 and the lower pressure-applying plate 122 once the stack 100S is in a compressed state, as shown in Figs. 1 and 2. In other words, the pair of side plates 123 keep the upper pressure-applying plate 121 and the lower pressure-applying plate 122 at a fixed spacing. Also, the pair of side plates 123 cover and protect the long-axis-direction-X side surfaces of the stacked unit cells 110. The side plates 123 are formed in a plate shape and are made of metal. The pair of side plates 123 are provided upright so as to face both long-axis-direction-X side surfaces of the stacked unit cells 110. The pair of side plates 123 are welded to the upper pressure-applying plate 121 and the lower pressure-applying plate 122.

The configuration of the busbar unit 130 is described in detail below.

The busbar unit 130 includes a busbar holder 131 for integrally holding a plurality of busbars 132, busbars 132 for electrically connecting the distal end parts 112d of the electrode tabs 112 of different unit cells 110 (vertically-lined-up unit cells 110), an anode-side terminal 133 that allows the anode-side ends of the electrically connected plurality of unit cells 110 to be exposed to an external input/output terminal, and a cathode-side terminal 134 that allows the cathode-side ends of the electrically connected plurality of unit cells 110 to be exposed to the external input/output terminal, and a protective cover 135 for protecting the busbars 132, etc..

The busbar holder 131 integrally holds the plurality of busbars 132, as shown in Figs. 2 and 4. The busbar holder 131 integrally holds the plurality of busbars 132 in the form of a matrix so that the plurality of busbars 132 faces the electrode tabs 112 of the unit cells 110 of the stack 100S. The busbar holder 131 is composed of an insulating resin and is formed in the shape of a frame.

The busbar holder 131 is provided with a pair of brace parts 131a that stand upright along the stacking direction Z, so as to be positioned on both long-axis-direction sides of the first spacers 114 that support the electrode tabs 112 of the unit cells 110, as shown in Fig. 4. The pair of brace parts 131a fit into the side surface of the first spacers 114. The pair of brace parts 131a assumes an "L" shape when viewed along the stacking direction Z, and is formed in a plate shape extending along the stacking direction Z. The busbar holder 131 is provided with a pair of auxiliary brace parts 131b, which are set apart and stand upright along the stacking direction Z, so as to be positioned near the long-axis-direction center of the first spacers 114. The pair of auxiliary brace parts 131b are formed in a plate shape extending along the stacking direction Z.

The busbar holder 131 is provided with insulating parts 131c that protrude between each of the busbars 132 that are mutually adjacent along the stacking direction Z, as shown in Fig. 4. The insulating parts 131c are formed in a plate shape that extends along the short-axis direction Y. Each of the insulating parts 131c is horizontally disposed between the auxiliary brace parts 131b and 131b. The insulating parts 131c prevent electrical discharge by insulating the space between the busbars 132 that are mutually adjacent along the stacking direction Z.

The busbar holder 131 can be configured by mutually joining the independently formed brace parts 131a and the auxiliary brace parts 131b and the insulating parts 131c, and can be configured by integrally molding the brace parts 131a and the auxiliary brace parts 131b and insulating parts 131c.

The busbars 132 electrically connect the electrode tabs 112 of the unit cells 110 lined up in the vertical direction, as shown in Figs. 3A, 3B, 4, and 5. The busbars 132 electrically connect the anode-side electrode tab 112A of one unit cell 110 and the cathode-side electrode tab 112K of another unit cell 110. The busbars 132 electrically connect, e.g., three anode-side electrode tabs 112A lined up vertically in the first cell subassembly 110M and three cathode-side electrode tabs 112K lined up vertically in the second cell subassembly 110N, as shown in Fig. 5.

In other words, the busbars 132 connect, e.g., three anode-side electrode tabs 112A in parallel in the first cell subassembly 110M and connect three cathode-side electrode tabs 112K in parallel in the second cell subassembly 110N, as shown in Fig. 5. Furthermore, the busbars 132 serially connect three anode-side electrode tabs 112A in the first cell subassembly 110M and three cathode-side electrode tabs 112K in the second cell subassembly 110N. The busbars 132 are laser-welded to the anode-side electrode tab 112A of one unit cell 110 and the cathode-side electrode tab 112K of another unit cell 110.

The busbars 132 are configured by joining anode-side busbars 132A and cathode-side busbars 132K, as shown in Figs. 3A and 4. The anode-side busbars 132A and the cathode-side busbars 132K have the same shape, and each assumes the form of a letter "L." The busbars 132 are integrated by a joining part 132c obtained by joining one bent end of the anode-side busbars 132A and one bent end of the cathode-side busbars 132K, as shown in Figs. 3A and 4. The anode-side busbars 132A and the cathode-side busbars 132K constituting the busbars 132 are provided with side parts 132d that join the busbar holder 131 to both short-axis-direction-Y ends, as shown in Fig. 4.

The anode-side busbars 132A are made of aluminum in the same manner as the anode-side electrode tabs 112A of the unit cells 110. The cathode-side busbars 132K are made of copper in the same manner as the cathode-side electrode tabs 112K of the unit cells 110. The anode-side busbars 132A and the cathode-side busbars 132K made of different metals are joined to each other by ultrasonic welding to form the joining part 132c.

Of the busbars 132 arranged in the form of a matrix, the busbar 132 positioned at the upper right in Fig. 4 corresponds to the anode-side end of 21 unit cells 110 (three in parallel, seven in series) and is constituted by only the anode-side busbars 132A. The anode-side busbars 132A are laser-welded to the anode-side electrode tabs 112A of the three topmost unit cells 110 of the stacked unit cells 110.

Of the busbars 132 arranged in the form of a matrix, the busbar 132 positioned at the lower left in Fig. 4 corresponds to the cathode-side end of 21 unit cells 110 (three in parallel, seven in series) and is constituted by only the cathode-side busbars 132K. The cathode-side busbars 132K are laser-welded to the cathode-side electrode tabs 112K of the three bottommost unit cells 110 of the stacked unit cells 110.

The anode-side terminal 133 allows the anode-side ends of the plurality of electrically connected unit cells 110 to be exposed to an external input/output terminal, as shown in Figs. 1 and 2. Of the busbars 132 arranged in the form of a matrix, the anode-side terminal 133 is joined to the anode-side busbars 132A positioned in the upper right of the drawing, as shown in Fig. 2. The anode-side terminal 133 is formed in a plate shape with both ends bent, and is made of an electroconductive metal.

The cathode-side terminal 134 allows the cathode-side ends of the plurality of electrically connected unit cells 110 to be exposed to an external input/output terminal, as shown in Figs. 1 and 2. Of the busbars 132 arranged in the form of a matrix, the cathode-side terminal 134 is joined to the cathode-side busbars 132K positioned in the lower left of the drawing, as shown in Fig. 2. The cathode-side terminal 134 has the shape of the anode-side terminal 133 with the top and bottom flipped.

The protective cover 135 protects the busbars 132, etc., as shown in Figs. 1 and 2. In other words, the protective cover 135 integrally covers the plurality of busbars 132 and thereby prevents each busbar 132 from coming into contact with another member, etc., to cause an electrical short circuit. The protective cover 135 is made of an insulating plastic in which one end 135b and the other end 135c of the side surface 135a standing upright along the stacking direction Z are bent in the longitudinal direction X in the manner of a claw, as shown in Fig. 2.

The protective cover 135 sandwiches and secures the busbar holder 131 from above and below by means of the one end 135b and the other end 135c while covering the busbars 132 by means of the side surface 135a. The side surface 135a of the protective cover 135 is provided with a first opening 135d, which comprises a rectangular hole and allows the anode-side terminal 133 to be exposed to the exterior, and a second opening 135e, which comprises a rectangular hole and allows the cathode-side terminal 134 to be exposed to the exterior.

### <Production method according to a first embodiment

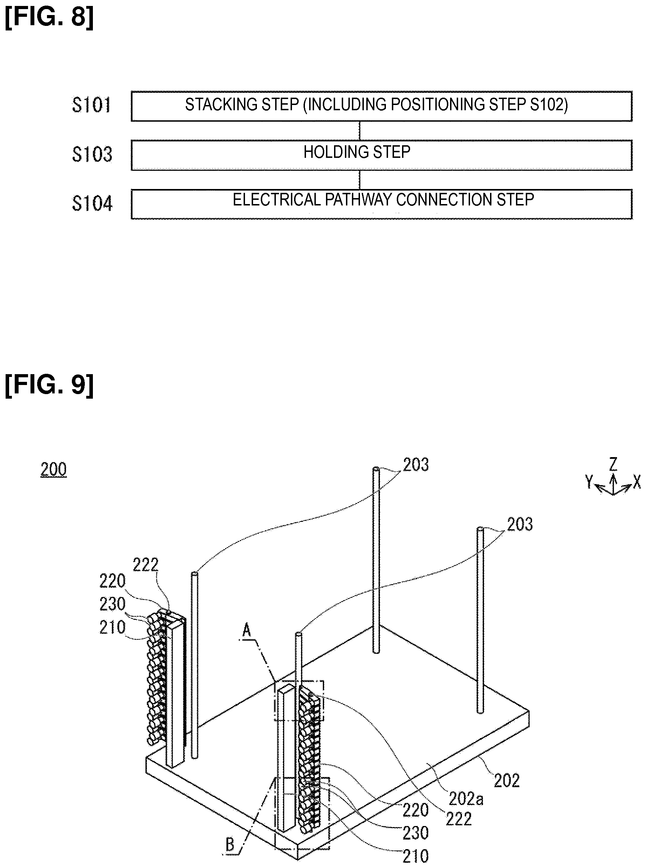

Next, a method for manufacturing the battery pack 100 and the device 200 for manufacturing the battery pack 100 according to a first embodiment will be described with reference to Figs. 8 to 22. First, the device 200 for manufacturing the battery pack 100 according to the first embodiment will be described, after which the production method will be described.

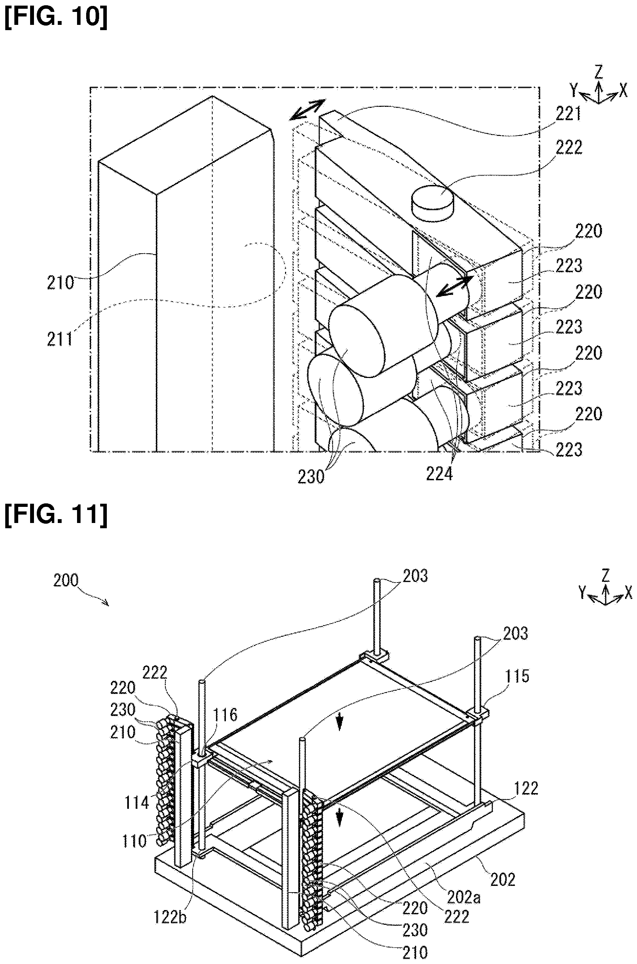

Fig. 8 is a flowchart showing the method for manufacturing the battery pack 100 according to the first embodiment. Fig. 9 is a perspective view showing a portion of the device 200 for manufacturing the battery pack 100 according to the first embodiment. Fig. 10 is an enlarged view of section A of Fig. 9.

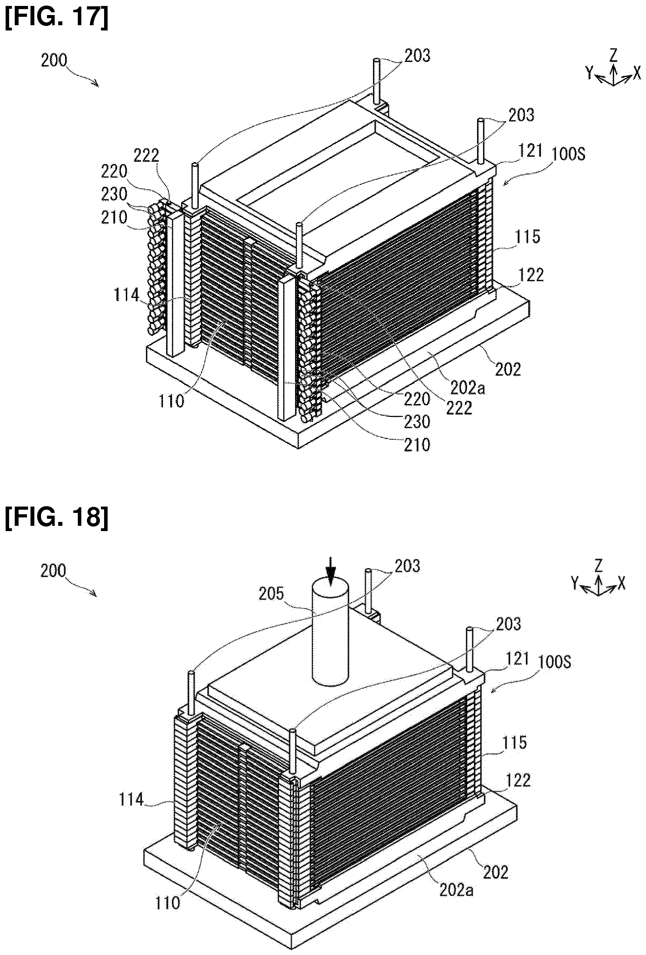

The device 200 for manufacturing the battery pack 100 according to the first embodiment has a placement stand 202, locating braces 203 extending from the placement stand 202 in the Z direction, and a reference jig 210 secured to the placement stand 202, as shown in Fig. 9. The device 200 for manufacturing the battery pack 100 also has a plurality of positioning members 220 provided along the stacking direction Z, and cylinders 230 that presses end parts of the positioning members 220 inward. Also, the device 200 for manufacturing the battery pack 100 has a press 205 used in a holding step S103, and a laser light source 206 used for laser welding, as shown in Figs. 18 to 21.

The placement stand 202 is formed in a plate shape and is arranged along the horizontal direction (long-axis direction X and short-axis direction Y).

Four locating braces 203 are provided upright at predetermined intervals on the placement surface 202a of the placement stand 202. The locating braces 203 align the relative rough positions of the lower pressure-applying plate 122, the pairs of spacers (the first spacers 114 and the second spacers 115) attached to the unit cells 110, and the upper pressure-applying plate 121. The individual stacked members are stacked one at a time by a robot arm, hand lifter, and vacuum-suction-type collet, etc. (none of which shown).

The locating braces 203 are configured so as to provide a predetermined clearance to the locating holes 114g of the first spacers 114.

The reference jig 210 is secured to and disposed on the placement stand 202, as shown in Figs. 9 to 12. There are no particular limitations as to the method for securing the reference jig 210 to the placement stand 202. The reference jig 210 has a reference surface 211 with which an extended surface 114k of the first spacer 114 abuts when the positioning member 220 rotates, as shown in

Fig. 13.

The positioning member 220 is provided for each first spacer 114, as shown in Figs. 9 and 10. In other words, a plurality of positioning members 220 are provided along the stacking direction Z. The positioning member 220 has a protrusion 221 capable of engaging in the recess 114j of the first spacer 114. The positioning member 220 is provided so as to allow rotation about the stacking direction Z via a pin 222 that follows along the stacking direction Z.

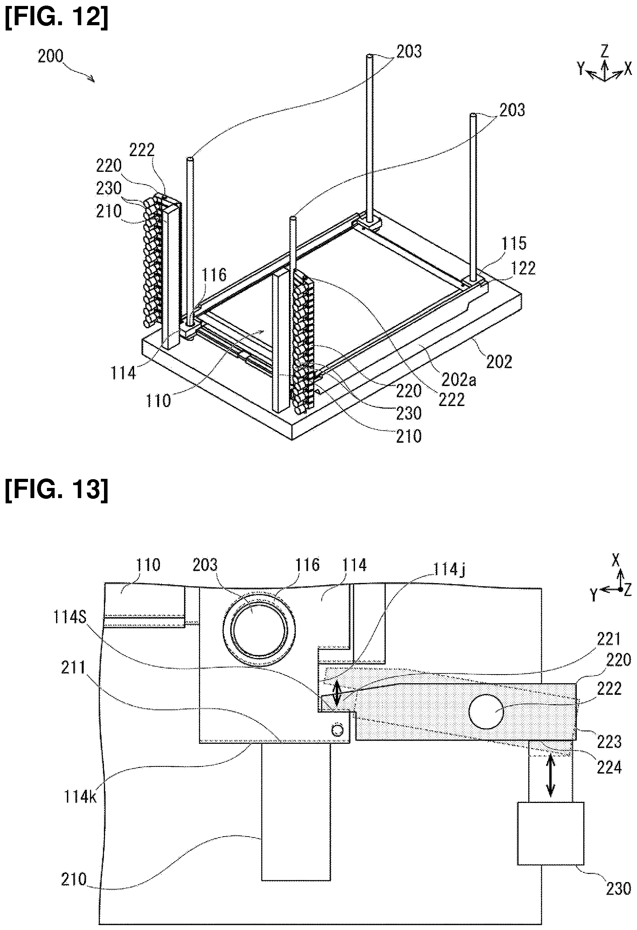

The cylinder 230 is positioned to the negative side (front surface side) in the X direction of the positioning member 220. A plurality of cylinders 230 is provided along the stacking direction Z in correspondence to a plurality of the positioning members 220 that follow along the stacking direction Z. The cylinders 230 inwardly press the end parts 223 of the positioning members 220 on the opposite side to the side on which the protrusion 221 is provided, from the X-direction negative side (front surface side) toward the X-direction positive side (rear surface side), whereby the positioning members 220 are caused to rotate about an axis of the pin 222, as shown in Figs. 10 and 13. In Figs. 10 and 13, the dotted line shows the state prior to inward pressing, and the solid line shows the state after pressing. As a result, the protrusion 221 makes contact with a first surface 114s of the recess 114j of the first spacer 114, and causes the first spacer 114 and unit cell 110 to move to the X-direction negative side (see Fig. 13). The extended surface 114k of the first spacer 114 makes contact with the reference surface 211 of the reference jig 210 and thereby position the portion where the electrode tab 112 is joined to the busbar 132 in a predetermined position in the direction in which the first spacers 114 move.

The cylinders 230 are preferably arranged in a staggered fashion, as shown in Fig. 10. Arranging the cylinders 230 in staggered fashion allows the diameter of the cylinder 230 to be increased and makes it possible to advantageously press the end part 223 of the positioning member 220 inward.

A first magnetic part (not shown) and a second magnetic part 224, which have mutually different magnetism, are provided to the end parts 223 of the positioning members 220 and the cylinders 230. By providing the first magnetic part and the second magnetic part 224 in this manner, the positioning members 220 move so as to follow the X-direction movement of the cylinders 230. Consequently, the positioning members 220 can be prevented from rotating without restriction, and processability in the production method is improved.

In the method for producing the battery pack 100, in a generic sense, the first spacer 114 is moved in one direction (in the present embodiment, the X-direction negative side) each time a unit cell 110 is stacked. The method has a positioning step S102 in which, as a result of the above, such that the portions of the electrode tabs 112 joined to the busbars 132 are positioned in a predetermined position in a direction in which the first spacers 114 move.

The method for producing the battery pack 100 according to the first embodiment has a stacking step S101 in which the unit cells 110, etc., are stacked one at a time, a holding step S103 in which the stack 100S is held in a compressed state, and an electrical pathway connection step S104 in which the plurality of stacked unit cells 110 are electrically connected together, as shown in Fig. 8. The above-described positioning step S102 is carried out in the stacking step S101.

First, the stacking step S101 will be described with reference to Figs. 11 to 17. In the following description, among the unit cells 110 stacked in the stacking step S101, the unit cell 110 disposed at the bottom is referred to as the "first unit cell 110," the unit cell 110 positioned second from the bottom is referred to as the "second unit cell 110," and the unit cell 110 positioned third from the bottom is referred to as the "third unit cell 110."

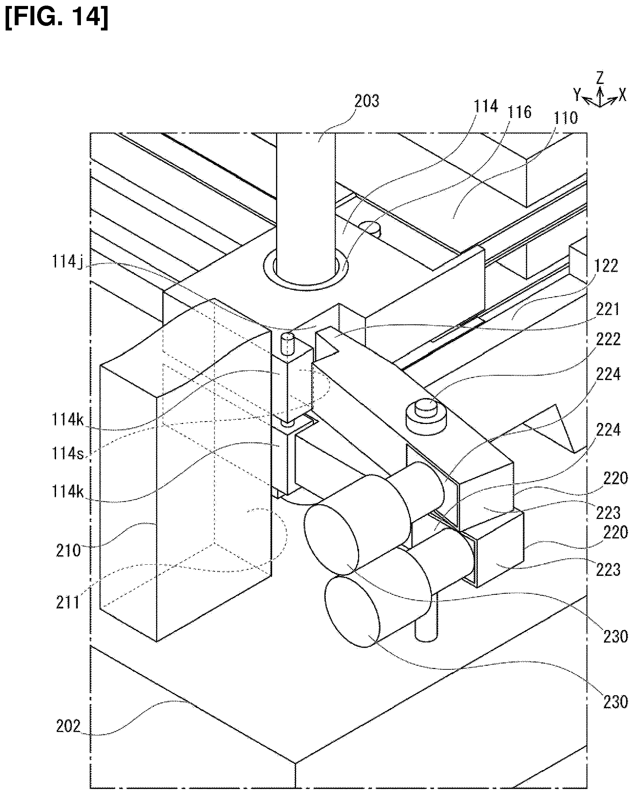

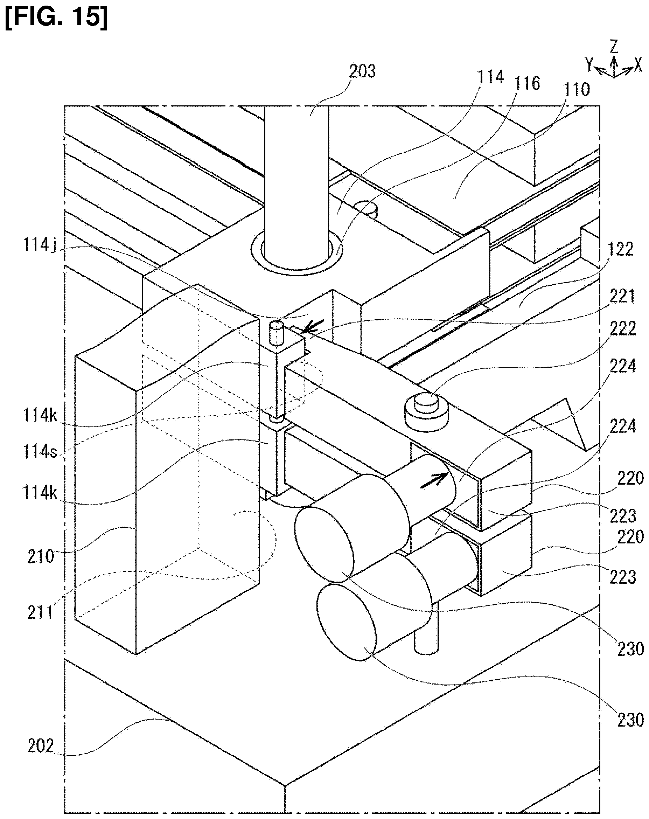

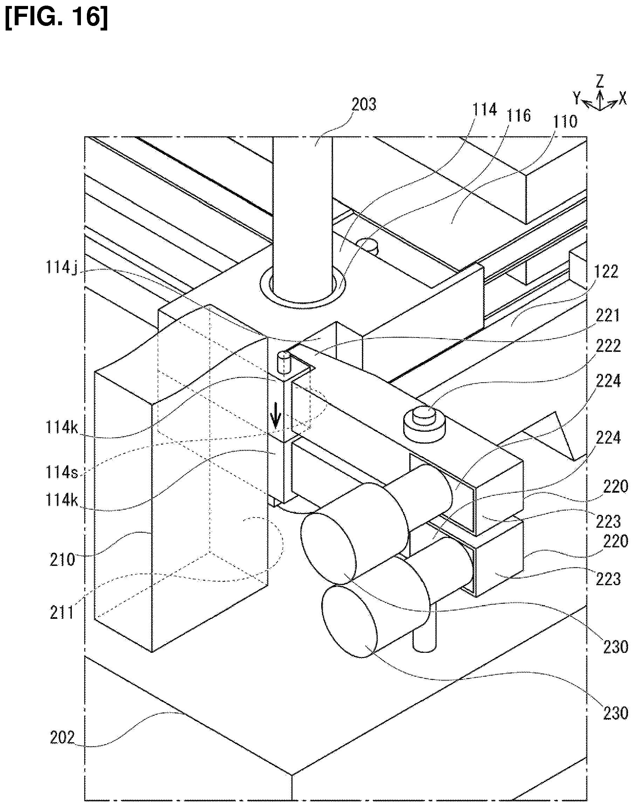

Fig. 11 is a perspective view schematically showing the lower pressure-applying plate 122 placed on the placement stand 202, and the first unit cell 110 being stacked on the lower pressure-applying plate 122. Fig. 12 is a perspective view schematically showing the first unit cell 110 stacked on the lower pressure-applying plate 122. Fig. 13 is a top view showing a state in which the positioning step S102 is performed. Fig. 14 is a perspective view schematically showing the second unit cell 110 being stacked on the first unit cell 110. Fig. 15 is a perspective view showing a state in which the positioning step S102 is performed with a gap arranged between the first unit cell 110 and the second unit cell 100. Fig. 16 is perspective view showing the state in which the second unit cell 110 has been brought into contact with the first unit cell 110. Fig. 17 is a perspective view schematically showing the upper pressure-applying plate 121 stacked on the stack 100S. A portion of the reference jig 210 and the positioning member 220 has been omitted from Figs. 14 to 16 in order to facilitate understanding. Figs. 14 to 16 are enlarged views of section B of Fig. 9.

In the stacking step S101, the locating holes 122b provided at the four corners of the lower pressure-applying plate 122 are slipped over the four locating braces 203, as shown in Fig. 11. In this state, the lower pressure-applying plate 122 is placed on the placement surface 202a of the placement stand 202 in the process of the lower pressure-applying plate 122 being lowered along the stacking direction Z.

Next, a pair of collars 116 provided at both ends of the first spacer 114 connected to the first unit cell 110 and a pair of collars 116 provided at both ends of the second spacer 115 are slipped over the four locating braces 203. In this state, the first unit cell 110 is stacked on the lower pressure-applying plate 122, as shown in Fig. 12, in the process of the pair of spacers (the first spacer 114 and the second spacer 115) attached to the unit cell 110 being lowered along the stacking direction Z.

Next, the tape member 117 is affixed to the upper surface of the first 110.

The above-described positioning step S102 is subsequently carried out.

As described above, the locating braces 203 are configured so as to provide a predetermined clearance to the locating holes 114g of the first spacer 114. Consequently, merely having the unit cells 110 stacked creates the possibility of variation in the positions of the first spacers 114 and the plurality of unit cells 110 stacked in the stacking direction Z in the XY plane after the stacking step has been completed. The positioning step S102 for eliminating positional variability in the XY plane and positioning the electrode tabs 112 is described in detail below.

In the positioning step S102, first, the cylinder 230 is controlled once the protrusion 221 of the positioning member 220 has engaged in the recess 114j of the first spacer 114, whereby the end part 223 of the positioning member 220 is pressed toward the upper side in Fig. 13, as shown in Fig. 13. The positioning member 220 thereby rotates about the axis (about the stacking direction Z) of the pin 222, the protrusion 221 of the positioning member 220 abuts the first surface 114s of the recess 114j of the first spacer 114, and the first spacer 114 is moved to the X-direction negative side (downward in Fig. 13). The extended surface 114k of the first spacer 114 comes into contact with the reference surface 211 of the reference jig 210. The portion where the electrode tab 112 is joined to the busbar 132 is thereby positioned in a predetermined position in the direction in which the first spacers 114 move.

Next, a pair of collars 116 provided at both ends of the first spacer 114 attached to the second unit cell 110 and a pair of collars 116 provided at both ends of the second spacer 115 are slipped over the four locating braces 203, as shown in Fig. 14. The pair of spacers (the first spacer 114 and the second spacer 115) attached to the second unit cell 110 is lowered along the stacking direction Z so that no contact is made with the tape member 117 affixed to the top surface of the first unit cell 110. Lowering is stopped with a predetermined gap (e.g., 1 mm) provided between the first unit cell 110 and the second unit cell 110. At this point, the first spacer 114 attached to the second unit cell 110 is set apart by a predetermined distance in the stacking direction Z from the first spacer 114 attached to the first unit cell 110, as shown in Fig. 14.

Next, the positioning step S102 is again carried out, as shown in Fig. 15. In other words, in the stacking step S101, the positioning step S102 is carried out before the first unit cell 110 and the second unit cell 110 make contact. The positioning step S102 performed on the second unit cell 110 is the same as the positioning step S102 performed on the first unit cell 110, and a description thereof is therefore omitted.

Next, after the positioning step S102 has ended, the first spacer 114 attached to the second unit cell 110 is lowered toward and allowed to make contact with the first spacer 114 attached to the first unit cell 110, as shown in Fig. 16. As a result, the second unit cell 110 makes contact with the first unit cell 110 via the tape member 117.

In the same manner as the second unit cell 110, the third and subsequent unit cells 110 undergo repetition of: the step of being lowered along the stacking direction Z until a predetermined gap is provided with the unit cell 110 positioned on the lower side; the positioning step S102; and the step of making contact with the lower unit cell 110.

The extended surface 114k of the first spacer 114 along the stacking direction Z lies in the same plane as the YZ plane. As a result, the portions where the electrode tabs 112 are joined to the busbars 132 can be aligned along the stacking direction Z.

The locating holes 121b provided at the four corners of the upper pressure-applying plate 121 are slipped over the four locating braces 203. In this state, the upper pressure-applying plate 121 is stacked on the unit cell 110 positioned at the top of the stack 100S while the upper pressure-applying plate 121 is lowered along the stacking direction Z. As a result, the stack 100S is sandwiched by the upper pressure-applying plate 121 and the lower pressure-applying plate 122, as shown in Fig. 17.

The step shown in Fig. 18 corresponds to a holding step S103. In continuation from Fig. 17, Fig. 18 schematically shows the stack 100S sandwiched between the upper pressure-applying plate 121 and the lower pressure-applying plate 122 being compressed by a press 205.

The press 205 moves along the stacking direction Z by means of a linear-motion stage (not shown) or a hydraulic cylinder (not shown), as shown in Fig. 18. When the press 205 moves downward along the stacking direction Z, the stack 100S sandwiched by the upper pressure-applying plate 121 and the lower pressure-applying plate 122 is compressed, and sufficient surface pressure is applied to the power generation element 111 of each unit cell 110. As a result, each unit cell 110 can demonstrate expected electrical characteristics.

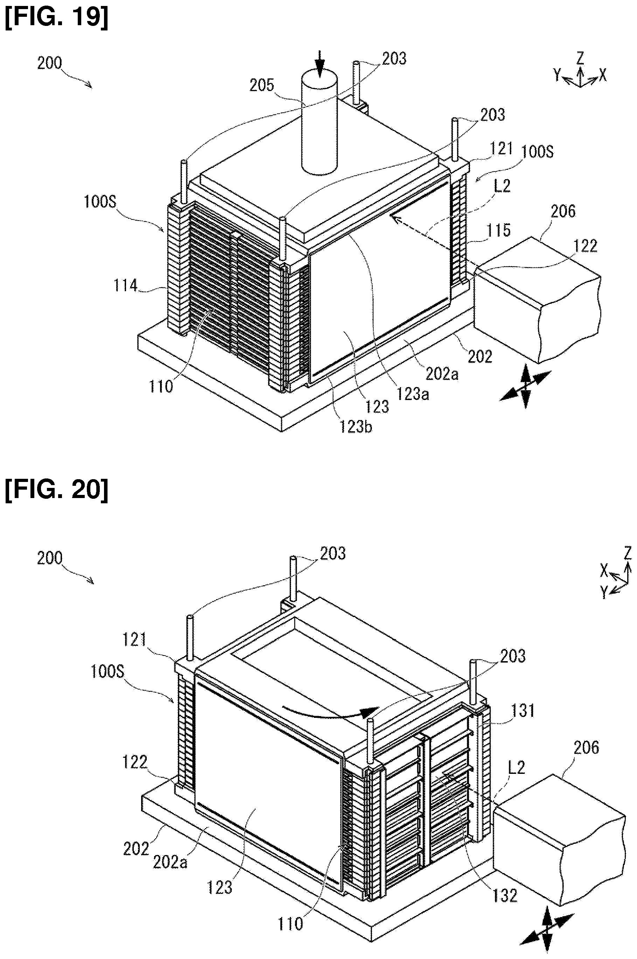

The step shown in Fig. 19 corresponds to the holding step S103. In continuation from Fig. 18, Fig. 19 schematically shows the side plate 123 being laser-welded to the upper pressure-applying plate 121 and the lower pressure-applying plate 122.

The side plates 123 are laser welded by a laser light source 206 while in close contact with the upper pressure-applying plate 121 and the lower pressure-applying plate 122 with sufficient surface pressure applied to the power generation element 111 of each unit cell 110, as shown in Fig. 19. The side plates 123 are pressed against the upper pressure-applying plate 121 and the lower pressure-applying plate 122 by means of a jig (not shown) provided with punch holes for laser irradiation. The laser light source 206 is configured from, e.g., an yttrium aluminum garnet (YAG) laser. A laser beam L2 emitted from the laser light source 206 is scanned diagonally along an upper end 123a and a lower end 123b of the side plates 123 to perform seam welding in a state in which the optical path is adjusted by an optical fiber or mirror and condensed by a condenser lens. The side plates 123 are provided as a pair so as to sandwich the upper pressure-applying plate 121 and the lower pressure-applying plate 122 from the left and right, and each are therefore laser welded. When the welding for one side plate 123 is completed, the placement stand 202 is rotated to cause the other side plate 123 and laser light source 206 to face each other to weld the other side plate 123. The pair of side plates 123 keep the upper pressure-applying plate 121 and the lower pressure-applying plate 122 at a fixed spacing. Therefore, the surface pressure applied to the power generation element 111 of each unit cell 110 is maintained even when the press 205 is moved away from the upper pressure-applying plate 121.

The step shown in Fig. 20 corresponds to the electrical pathway connection step S104. In continuation from Fig. 19, Fig. 20 schematically illustrates a state in which the busbars 132 are made to abut corresponding electrode tabs 112 of the stacked unit cells 110 and laser welding is performed.

The placement stand 202 is rotated 90° in the counterclockwise direction in the drawing from the state in Fig. 19, and the electrode tabs 112 of the stacked unit cells 110 are made to face the laser light source 206, as shown in Fig. 20. The busbar holder 131 is moved by a robot arm (not shown), and the busbars 132 integrally held by the busbar holder 131 are pressed against the corresponding electrode tabs 112 of the stacked unit cells 110. In the above-described state, the laser beam L2 is emitted from the laser light source 206, and the electrode tabs 112 of the corresponding busbars 132 are seam welded in sequence. At this point, in the positioning step S102, the portions where the electrode tabs 112 are joined to the busbars 132 are positioned in a predetermined position, and the distance from the position where the laser light source 206 is arranged to the electrode tabs 112 can therefore be aligned with high precision along the stacking direction Z. Therefore, the electrode tabs 112 and the busbars 132 can be advantageously joined when laser welding is carried out.

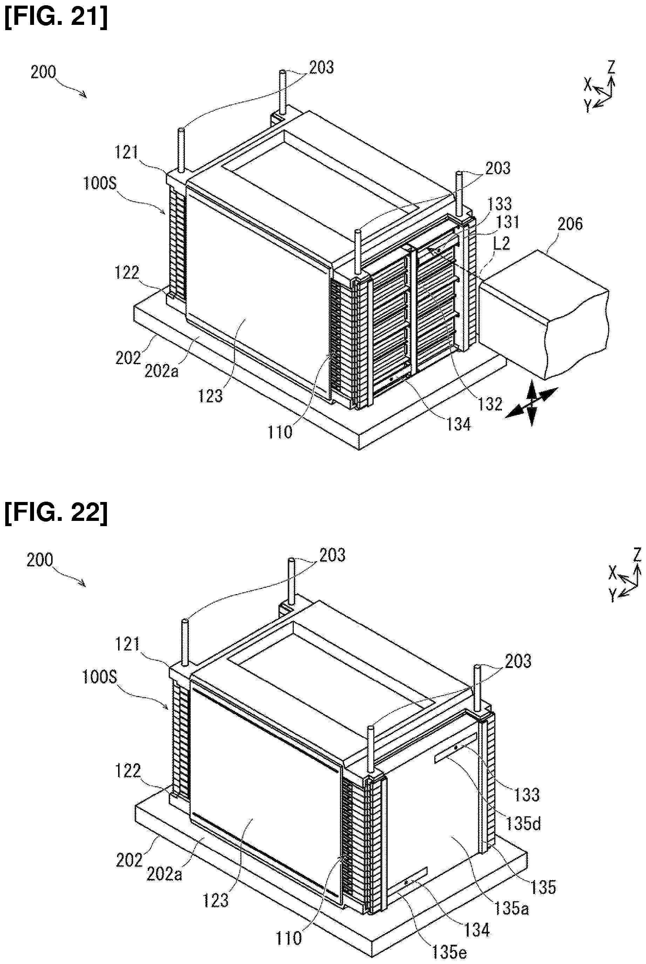

The step shown in Fig. 21 corresponds to the electrical pathway connection step S104. In continuation from Fig. 20, Fig. 21 schematically shows a partially completed state in which the anode-side terminal 133 is made to abut and be laser-welded to the anode-side busbars 132A at the anode-side end, and the cathode-side terminal 134 is made to abut and be laser-welded to the cathode-side busbars 132K at the cathode-side end.

Of the busbars 132 arranged in the form of a matrix, the anode-side terminal 133 is joined to the anode-side busbars 132A corresponding to the anode-side end and positioned in the upper right of the drawing, as shown in Fig. 21. Similarly, of the busbars 132 arranged in the form of a matrix, the cathode-side terminal 134 is joined to the cathode-side busbars 132K corresponding to the cathode-side end and positioned in the lower left of the drawing.

The step shown in Fig. 22 corresponds to the electrical pathway connection step S104. In continuation from Fig. 21, Fig. 22 schematically shows a state in which the plurality of busbars 132 are covered by a single protective cover 135.

The protective cover 135 is moved by the robot arm (not shown), and one end 135b and another end 135c of the protective cover 135 are fitted into the busbar holder 131, as shown in Fig. 22. The protective cover 135 is secured to the busbar holder 131 using a snap-fit-like hook, a screw, or an elastic adhesive. The protective cover 135 allows the anode-side terminal 133 to be exposed to the exterior through the first opening 135d provided to the side surface 135a, and allows the cathode-side terminal 134 to be exposed to the exterior through the second opening 135e provided to the side surface 135a. The protective cover 135 prevents the busbars 132 from making contact with an external member, etc., and short-circuiting or leaking current.

The method for producing the battery pack 100 described with reference to Figs. 9 to 22, etc., can be implemented in any mode; i.e., an automatic machine that controls all steps via a controller, a semiautomatic machine in which a worker has responsibility for some of the steps, or a manual machine in which a worker has responsibility for all the steps.

As described above, the method for producing the battery pack 100 according to the present embodiment is for producing the battery pack 100 having a plurality of unit cells 110, first spacers 114, and busbars 132. In the method for producing the battery pack 100, the first spacers 114 are moved to the X-direction negative side for each stacking step S101 of stacking the unit cells 110, whereby the portions where the electrode tabs 112 are joined to the busbars 132 are positioned in a predetermined position in the direction in which the first spacers 114 move. According to this production method, the first spacers 114 are moved to the X-direction negative side each time the unit cell 110 is stacked, whereby the portions where the electrode tabs 112 are joined to the busbars 132 are positioned in a predetermined position in the direction in which the first spacers 114 move. Accordingly, the distance from the position where the laser light source 206 is arranged to the electrode tabs 112 can be aligned with high precision along the stacking direction Z after the unit cell 110 has be stacked. Therefore, the electrode tabs 112 and the busbars 132 can be advantageously joined when laser welding is carried out.

In the stacking step S101, the electrode tabs 112 are positioned prior to the unit cells 110 making contact with each other. Accordingly, the first spacer 114 can be advantageously moved even when the tape member 117 is disposed between the unit cells 110, and the portions where the electrode tabs 112 are joined to the busbars 132 can be positioned in a predetermined position.

The tape member 117 is disposed on the surface of the unit cells 110 prior to the stacking step S101, and the electrode tabs 112 are positioned before the unit cells 110 are brought close to each other with the tape member 117 sandwiched therebetween in the stacking step S101, and prior to the unit cells 110 overlapping each other with the tape member 117 interposed therebetween. According to this production method, the unit cells 110 overlap each other with the tape member 117 interposed therebetween, and stress imparted on the laminate film 113 positioned on the outermost layer of the unit cells 110 is therefore absorbed and the laminate film 113 is protected when the unit cells 110 shake or when shock is imparted to the unit cells 110.

The electrode tabs 112 are positioned in relation to the busbars 132 by the positioning member 220 provided to each first spacer 114. Accordingly, positioning of the electrode tabs 112 is facilitated each time a unit cell 110 is stacked.

The first spacers 114 are moved by moving the positioning member 220 in a state in which the protrusion 221 provided to the positioning member 220 is engaged in the recess 114j provided to the first spacer 114. According to this production method, the portions where the electrode tabs 112 are joined to the busbars 132 are more readily positioned in a predetermined position.

The positioning members 220 are provided so as to be capable of rotating about the stacking direction Z via a pin 222 provided along the stacking direction Z. By inwardly pressing the end part 223 of the positioning member 220 on the opposite side to the side on which the protrusion 221 is provided, the positioning member 220 is caused to rotate about the axis of the pin 222, and the electrode tab 112 is positioned in relation to the busbar 132. Consequently, the portion where the electrode tab 112 is joined to the busbar 132 is readily positioned in a predetermined position.

When the first spacers 114 are moved, the positioning member 114 abuts the reference surface 211, whereby the electrode tabs 112 are positioned in relation to the busbars 132. According to this production method, causing the first spacers 114 to abut the reference surface 211 makes it possible to position the electrode tabs 112; therefore, the electrode tabs 112 can be readily positioned.

Also, the distal end parts 112d of the electrode tabs 112 are bent along the stacking direction Z and the first spacers 114 are moved so that the electrode tabs 112 will be positioned in the planar direction of the unit cells 110, with the first spacers 114 facing away from the unit cells 110 (X-direction negative side). According to this production method, the first spacers 114 are moved away from the unit cells 110; therefore, the electrode tabs 112 can be readily positioned.

As described above, the device 200 for manufacturing the battery pack 100 according to the present embodiment is a device 200 for producing the battery pack 100 having a plurality of the unit cells 110, first spacers 114, and busbars 132. The production device 200 has positioning members 220 in which the first spacers 114 are moved to the X-direction negative side for each stacking step S101 of stacking the unit cells 110, whereby the portions where the electrode tabs 112 are joined to the busbars 132 are positioned in a predetermined position in the movement direction of the first spacers 114. According to this production device 200, the distance from the position where the laser light source 206 is arranged to the electrode tabs 112 can be aligned with high precision along the stacking direction Z. Therefore, the electrode tabs 112 and the busbars 132 can be advantageously joined when laser welding is carried out.

### <Production method according to a second embodiment>

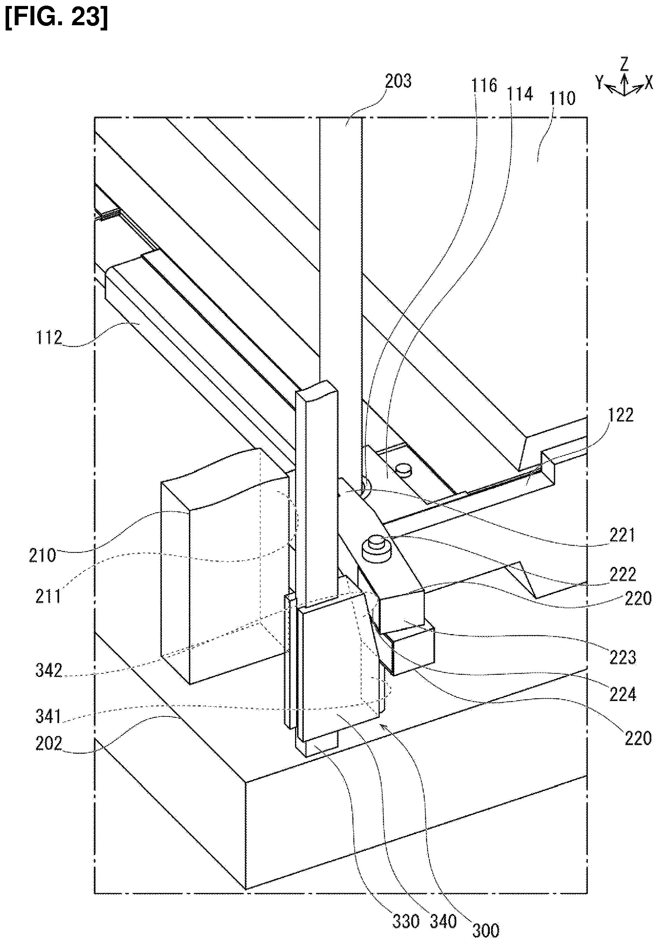

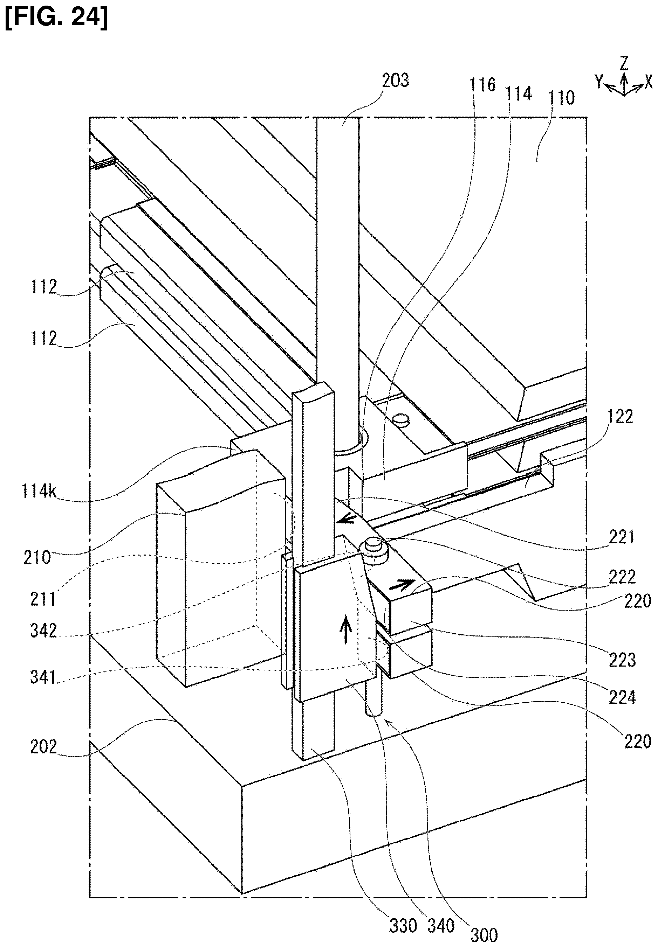

Next, a method and production device 300 for producing the battery pack 100 and according to a second embodiment will be described with reference to Figs. 23 and 24.

Fig. 23 is a perspective view showing the method for producing the battery pack 100 according to the second embodiment and a state in which an electrode tab 112 of the first unit cell 110 is positioned. Fig. 24 is a perspective view showing the method for producing a battery pack 100 according to the second embodiment and a state in which an electrode tab 112 of the second unit cell 110 is positioned. A portion of the reference jig 210, the positioning member 220, and an extended part 330 has been omitted from Figs. 23 and 24 in order to facilitate understanding.

Portions that are the same as the first embodiment are not described, while locations that are only features of the second embodiment will be described. The description will use the same reference numerals for the same members as the first embodiment described above; duplicate descriptions are omitted. The production method according to the second embodiment differs from the production method according to the first embodiment in that the positioning member 220 is pressed into the X-direction positive side.

The method for producing the battery pack 100 according to the second embodiment has a stacking step S201, a holding step S103, and an electrical pathway connection step S104. The stacking step S201 is provided with a positioning step S202.

The device 300 for producing the battery pack 100 according to the second embodiment has a placement stand 202, locating braces 203, a reference jig 210, and positioning members 220, as shown in Figs. 23 and 24. The production device 300 has an elongated part 330 elongated in the stacking direction Z, and a tapered block 340 capable of moving in the stacking direction Z. The configuration of the placement stand 202, the locating braces 203, the reference jig 210, and the positioning members 220 is the same as in the device 200 for manufacturing the battery pack 100 according to the first embodiment, and is therefore not described.

The elongated part 330 is elongated in the stacking direction Z, as shown in Figs. 23 and 24. The elongated part 330 is provided to the Y-direction negative side of the reference jig 210 and to the X-direction negative side of the positioning members 220.

The tapered block 340 is mounted on the elongated part 330 so as to be capable of sliding in the stacking direction Z, as shown in Figs. 23 and 24. The tapered block 340 moves in the stacking direction Z by means of a control unit (not shown). The tapered block 340 has an abutting part 341 that can abut the end parts 223 of the positioning members 220, and a tapered part 342 that slopes continuing from the abutting part 341 to the X-direction negative side further toward the upper side in the stacking direction Z. The tapered block 340 moves upward and the tapered part 342 presses the end parts 223 of the positioning members 220 inward toward the X-direction negative side, as shown in Figs. 23 and 24. The positioning members 220 are thereby caused to rotate about the axis of the pin 222. As a result, the protrusion 221 makes contact with a first surface 114s of the recess 114j of the first spacer 114, and causes the first spacer 114 and the unit cell 110 to move to the X-direction negative side. The extended surface 114k of the first spacer 114 makes contact with the reference surface 211 of the reference jig 210 and thereby positions the portion where the electrode tab 112 is joined to the busbar 132 in a predetermined position in the direction in which the first spacers 114 move.

In the method for producing the battery pack 100 according to the second embodiment, only the stacking step S201 differs from the method for producing the battery pack 100 according to the first embodiment. For this reason, the stacking step S201 of the method for producing the battery pack 100 according to the second embodiment will be described hereinbelow.

First, in the same manner as the first embodiment, the lower pressure-applying plate 122 is placed on the placement surface 202a of the placement stand 202, the first unit cell 110 is stacked on the lower pressure-applying plate 122, and the tape member 117 is affixed to the top surface of the first unit cell 110.

Next, the positioning step S202 is carried out.

In the positioning step S202, the tapered block 340 moves upward in the stacking direction Z and pushes the end part 223 of the first positioning member 220 from the X-direction negative side toward the positive side, as shown in Fig. 23. The positioning member 220 thereby rotates about the axis (about the direction Z) of the pin 222, the protrusion 221 of the positioning member 220 abuts the first surface 114s of the recess 114j of the first spacer 114, and the first spacer 114 is moved to the X-direction negative side. The extended surface 114k of the first spacer 114 abuts the reference surface 211 of the reference jig 210. The portion where the electrode tab 112 is joined to the busbar 132 is thereby positioned in a predetermined position in the direction in which the first spacers 114 move.

The pair of spacers (the first spacer 114 and the second spacer 115) attached to the second unit cell 110 is lowered along the stacking direction Z. Lowering is stopped with a predetermined gap provided between the first unit cell 110 and the second unit cell 110.

Next, the positioning step S202 is again carried out, as shown in Fig. 24. Specifically, the tapered block 340 is moved upward in the stacking direction Z, the positioning member 220 is rotated by the tapered part 342 of the tapered block 340, and the abutting part 341 is caused to abut the end part 223 of the positioning member 220.

Next, after the positioning step S202 has ended, the first spacer 114 attached to the second unit cell 110 is lowered toward and allowed to make contact with the first spacer 114 attached to the first unit cell 110. As a result, the second unit cell 110 makes contact with the first unit cell 110 via the tape member 117.

In the same manner as the second unit cell 110, the third unit cell 110 and thereafter undergo repetition of: the step of being lowered along the stacking direction Z until a predetermined gap is provided with the unit cell 110 positioned on the lower side; the positioning step S202; and the step of making contact with the lower unit cell 110.

As described above, in the method for producing the battery pack 100 according to the second embodiment, the tapered block 340 provided with the tapered part 342 rises along the stacking direction Z, whereby the tapered part 342 makes contact with the end part 223 and presses the end part 223 inward. According to this production method, rather than controlling a plurality of cylinders 230 used in the method for producing the battery pack 100 according to the first embodiment, a single tapered block 340 can be controlled, and therefore the production device can be prevented from increasing in complexity.

### <Production method according to a third embodiment>

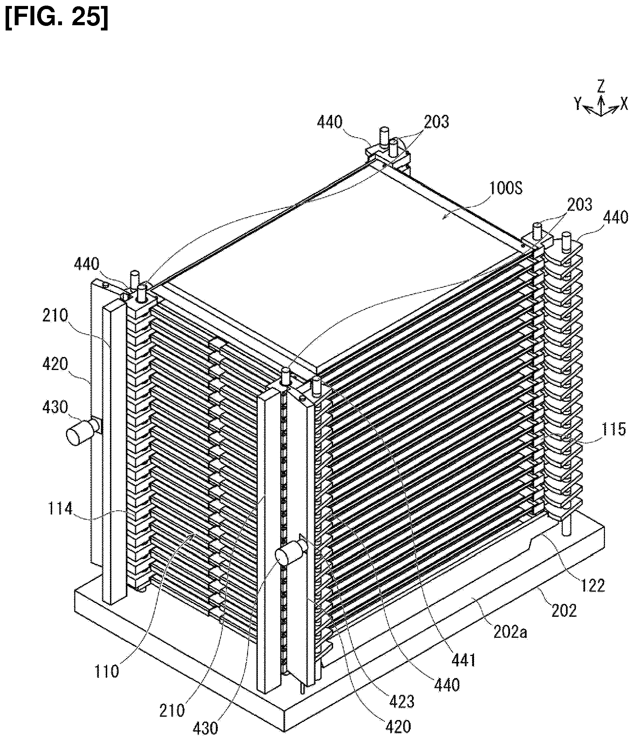

Next, a method and device 400 for producing the battery pack 100 according to a third embodiment will be described with reference to Figs. 25 to 28.

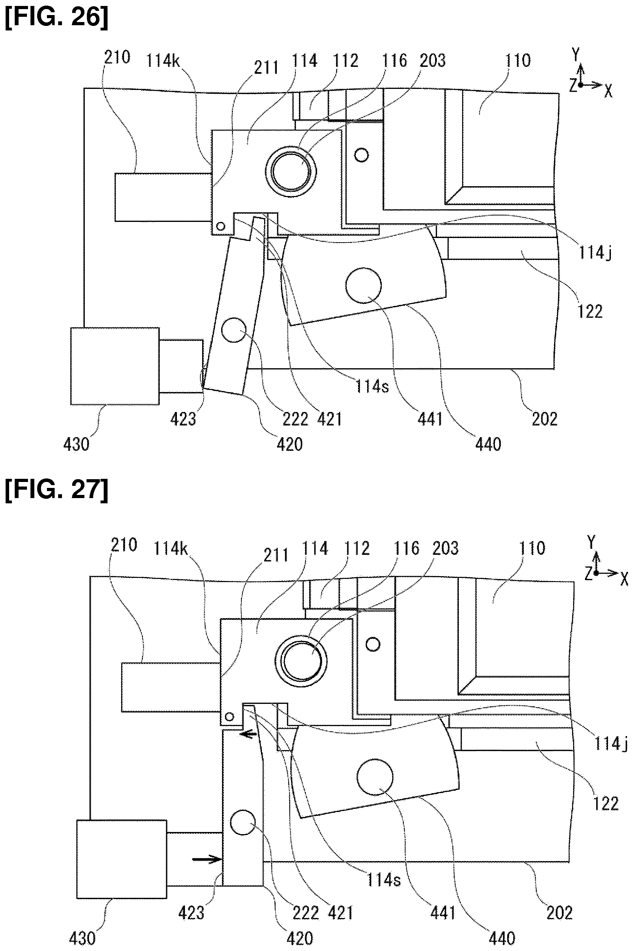

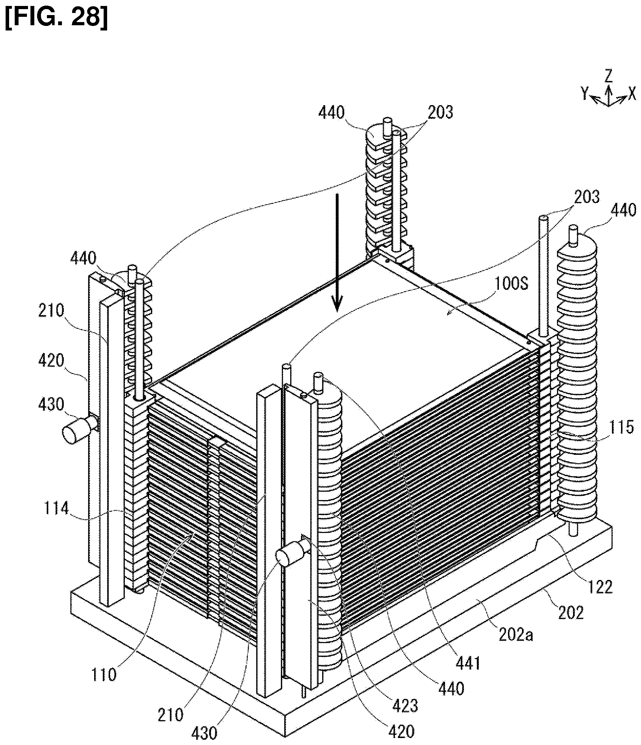

Fig. 25 is a perspective view showing the method for producing the battery pack 100 according to the third embodiment, and a state in which unit cells 110 have been stacked using support parts 440with gaps interposed therebetween. Fig. 26 is a top view showing the method for producing the battery pack 100 according to the third embodiment and a state prior to the positioning step S302 being performed. Fig. 27 is a top view showing the method for producing the battery pack 100 according to the third embodiment and the state after the positioning step S302 has been performed. Fig. 28 is perspective view showing the method for producing the battery pack 100 according to the third embodiment and a state in which the supporting state of the support parts 440 has been released and all of the unit cells 110 have been stacked.

Portions that are the same as the first embodiment are not described; locations characteristic only to the third embodiment will be described. The description will use the same reference numerals for the same members as the first embodiment described above; duplicate descriptions are omitted. In the production method according to the third embodiment, the stacking step S301 differs from the production method according to the first embodiment.

The method for producing the battery pack 100 according to the third embodiment has a stacking step S301, a holding step S103, and an electrical pathway connection step S104. The stacking step S301 is provided with a positioning step S302.

A device 400 for producing the battery pack 100 according to the third embodiment has a placement stand 202, locating braces 203, and a reference jig 210, as shown in Figs. 25 to 28. The production device 400 also has a positioning member 420 provided extending in the stacking direction Z, and a cylinder 430 that presses an end part 423 of the positioning member 420 inward, and support parts 440 that support the first spacers 114 with a gap provided between the unit cells 110. The placement stand 202, the locating braces 203, and the reference jig 210 are the same as in the device 200 for manufacturing the battery pack 100 according to the first embodiment, and a description is therefore omitted.

A single positioning member 420 is provided extending along the Z direction, differing from the production device 200 of the first embodiment. The positioning member 420 has a protrusion 421 capable of engaging in the recess 114j of the first spacer 114, as shown in Figs. 26 and 27. The positioning members 420 are provided so as to be capable of rotating via a pin 222 along the stacking direction Z.

The cylinder 430 is positioned near the center of the positioning member 420 along the stacking direction Z. The cylinder 430 presses the end part 423 of the positioning member 420 inward, whereby the positioning member 220 is caused to rotate about the axis of the pin 222, as shown in Figs. 26 and 27. As a result, the protrusion 421 makes contact with a first surface 114s of the recess 114j of the first spacer 114, and causes the first spacer 114 and unit cell 110 to move to the X-direction negative side. The extended surface 114k of the first spacer 114 makes contact with the reference surface 211 of the reference jig 210 to thereby position the portion where the electrode tab 112 is joined to the busbar 132 in a predetermined position in the direction in which the first spacers 114 move.

The support parts 440 support the first spacers 114 so that the unit cells 110 are arranged via a gap between each other, as shown in Figs. 25 to 27. The support parts 440 are provided so as to allow rotation about the stacking direction Z by means of a pin 441 that follows along the stacking direction Z. The support parts 440 rotate about the stacking direction Z, thereby making it possible to switch between a supporting state (see Figs. 25 to 27) in which the first spacers 114 are supported and a retracted state (see Fig. 28) in which the first spacers 114 are not supported.

In the method for producing the battery pack 100 according to the third embodiment, only the stacking step S301 differs from the method for producing the battery pack 100 according to the first embodiment. For this reason, the stacking step S301 of the method for producing the battery pack 100 according to the third embodiment will be described hereinbelow. In the following description, the support part 440 positioned at the bottom is referred to as a "first support part 440," and the support part 440 positioned second from the bottom is referred to as a "second support part 440."

In the stacking step S301, first, the unit cells 110 are stacked so that the unit cells 110 are arranged via a gap between each other, as shown in Fig. 25. Specifically, the first unit cell 110 is stacked with the first support part 440 in a retracted state, and the first support part 440 is set in a supporting state. Next, the first unit cell 110 is stacked with the second support part 440 in a retracted state, and then the second support part 440 is set in a supporting state. This step is repeated to stack the unit cells 110 via a gap interposed therebetween using the supporting parts 440, as shown in Fig. 25.

Next, the positioning step S302 is carried out.

In the positioning step S302, first, the cylinder 430 is controlled while the protrusion 221 of the positioning member 220 is engaged in the recess 114j of the first spacer 114, whereby the end part 423 of the positioning member 420 is pressed (see the arrow in Fig. 26), as shown in Figs. 26 and 27. The positioning member 420 thereby rotates about the axis (about the stacking direction Z) of the pin 222, the protrusion 421 of the positioning member 420 abuts the first surface 114s of the recess 114j of the first spacer 114, and the first spacer 114 is moved to the X-direction negative side. The extended surface 114k of the first spacer 114 abuts the reference surface 211 of the reference jig 210. The portion where the electrode tab 112 is joined to the busbar 132 is thereby positioned in a predetermined position in the direction in which the first spacers 114 move.

Next, with all of the support parts 440 in a retracted state, all of the unit cells 110 are stacked downward in the stacking direction Z, as shown in Fig. 28. The extended surface 114k of the first spacer 114 along the stacking direction Z lies in the same plane as the YZ plane. As a result, the portions where the electrode tabs 112 are joined to the busbars 132 can be aligned along the stacking direction Z.

As described above, in the method for producing the battery pack 100 according to the third embodiment, a plurality of the unit cells 110 are stacked with gaps interposed therebetween. The first spacers 114 are moved in one direction, whereby the portions where the electrode tabs 112 are joined to the busbars 132 are positioned in a predetermined position in the movement direction of the first spacers 114. Then, the unit cells 110 are brought into contact with each other. According to this production method, the distance from the position where the laser light source 206 is arranged to the electrode tabs 112 can be aligned with high precision along the stacking direction Z. Therefore, the electrode tabs 112 and the busbars 132 can be advantageously joined when laser welding is carried out.

A variety of modifications can be made to the present invention on the basis of the configuration described in the claims, and such variations are included within the scope of the present invention.

For example, in the first and second embodiments described above, the electrode tabs 112 are positioned prior to the unit cells 110 making contact with each other. However, when the tape member 117 is not provided between the unit cells 110, the electrode tabs 112 may be positioned after the unit cells 110 have come into contact with each other. In such instances, friction is produced by the dead weight of the unit cells 110, and displacement between the unit cells 110 can be minimized.

In the first embodiment described above, the first spacer 114 is moved by rotating the positioning member 220 in a state in which the protrusion 221 of the positioning member 220 is engaged in the recess 114j of the first spacer 114. Such a configuration is not provided by way of limitation; it is also possible to provide a recess to the positioning member, provide a protrusion to the first spacer, and have these engage each other.

Also, in the first embodiment described above, the first spacers 114 are moved by the cylinders 230. However, the first spacers 114 may be gripped and moved by a hand robot.

In the first embodiment described above, the extended surfaces 114k of the first spacers 114 are caused to abut the reference surface 211 of the reference jig 210, whereby the extended surfaces 114k are set in the same plane. However, it is also possible to set the extended surfaces 114k in the same plane by means of the positioning members 220 and the cylinders 230 without providing a reference jig. In such instances, the laser oscillator may be adjusted, as appropriate, so that the focal point of the laser light is in a suitable location.

In the first embodiment described above, the distal end parts 112d of the electrode tabs 112 are bent along the stacking direction Z, but the distal end parts are not required to be bent.

In the first embodiment described above, positioning is carried out for each unit cell 110, but positioning may be carried out for a plurality of unit cells 110 (e.g., three). According to this method, production time can be reduced.

### Key to Symbols

- 100: Battery pack
- 100S: Stack
- 110: Unit cell
- 110M: First cell subassembly
- 110N: Second cell subassembly
- 111: Power generation element
- 112: Electrode tab
- 112d: Distal end part of the electrode tab
- 112A: Anode-side electrode tab
- 112K: Cathode-side electrode tab
- 113: Laminate film
- 114: First spacer
- 114j: Recess
- 115: Second spacer
- 116: Collar
- 117: Tape member (adhesive member)
- 120: Compression unit
- 121: Upper pressure-applying plate
- 122: Lower pressure-applying plate
- 123: Side plate
- 130: Busbar unit
- 131: Busbar holder
- 132: Busbar
- 132A: Anode-side busbar
- 132K: Cathode-side busbar
- 133: Anode-side terminal
- 134: Cathode-side terminal
- 135: Protective cover
- 200, 300, 400: Production device
- 202: Placement stand
- 203: Locating brace part
- 205: Press
- 206: Laser light source
- 210: Reference jig
- 211: Reference surface
- 220, 420: Positioning member
- 221: Protrusion
- 222: Pin
- 223: End part
- 230: Cylinder
- 340: Tapered block
- 342: Tapered part
- S101, S201, S301: Stacking step
- S102, S202, S302: Positioning step
- S103: Holding step
- S104: Electrical pathway connection step
- L1, L2: Laser beam
- X: Long-axis direction (of the unit cells 110)
- Y: Short-axis direction (of the unit cells 110)
- Z: Stacking direction (of the unit cells 110)

## Claims

1. A method for producing a battery pack having a plurality of unit cells that include a power generation element and electrode tabs extending out of an exterior of the power generation element, spacers that support the electrode tabs, and busbars that electrically connect the electrode tabs of different ones of the unit cells, comprising:
moving the spacers in one direction for each stacking step in which the unit cells are stacked such that portions of the electrode tabs joined to the busbars are positioned in a predetermined position in a direction in which the spacers move.

2. The method for producing a battery pack according to claim 1, wherein the electrode tabs are positioned prior to the unit cells making contact with each other in the stacking step.

3. The method for producing a battery pack according to claim 1, wherein
disposing an adhesive member on a surface of the unit cells prior to the stacking step, and
positioning the electrode tabs prior to the unit cells overlapping each other with the adhesive member interposed therebetween when the unit cells are brought close to each other with the adhesive member sandwiched therebetween in the stacking step.

4. The method for producing a battery pack according to any of claims 1 to 3, wherein the positioning of the electrode tabs using a positioning member provided for each of the spacers.

5. The method for producing a battery pack according to claim 4, wherein the spacers are moved by moving the positioning members in a state in which protrusions provided to the positioning members are engaged in recesses provided to the spacers.

6. The method for producing a battery pack according to claim 5, wherein
the positioning members are rotatably provided around an axis of a pin that is provided along a stacking direction in which the unit cells are stacked, and
end parts of the positioning members on an opposite side to a side on having the protrusions are pressed inward such that positioning of the electrode tabs are performed by rotating the positioning members about the axis of the pin.

7. The method for producing a battery pack according to claim 6, wherein providing a tapered block with a tapered part rises along the stacking direction, such that the tapered part contacts the end parts and presses the end parts inward.

8. The method for producing a battery pack according to any of claims 1 to 7, wherein
when moving the spacers,
the spacers are caused to abut a reference surface serving as a reference, whereby the electrode tabs are positioned.

9. The method for producing a battery pack according to any of claims 1 to 8, wherein
distal end parts of the electrode tabs are bent along the stacking direction of the unit cells, and
the spacers are moved in a planar direction of the unit cells with the spacers facing away from the unit cells to position the electrode tabs.

10. A device for producing a battery pack having a plurality of unit cells that include a power generation element and electrode tabs extending out of an exterior of the power generation element; spacers that support the electrode tabs; and busbars that electrically connect the electrode tabs of different ones of the unit cells, the battery pack production device comprising:
a positioning member in which the spacers are moved in one direction for each stacking step in which the unit cells are stacked such that portions of the electrode tabs joined to the busbars are positioned in a predetermined position in a direction in which the spacers move.

11. A method for producing a battery pack having a plurality of unit cells that include a power generation element and electrode tabs extending out of an exterior of the power generation element; spacers that support the electrode tab; and busbars that electrically connect the electrode tabs of different ones of the unit cells, comprising:
stacking the plurality of unit cells with a gap interposed therebetween, and moving the spacers in one direction, such that portions of the electrode tabs joined to the busbars are positioned in a predetermined position in a direction in which the spacers move, after which the unit cells are brought into contact with each other.
